# EUROPEAN PATENT APPLICATION

(11) **EP 2 645 680 A1**
(43) Date of publication of application: **02.10.2013**
(21) Application number: 11842559.4
(22) Date of filing: 18.11.2011
(51) Int. Cl.: H04M 1/00

(54) **MOBILE TERMINAL, NON-TRANSITORY COMPUTER-READABLE MEDIUM STORING CONTROL PROGRAM THEREFOR, AND CONTROL METHOD**

(30) Priority: 26.11.2010 JP 2010263344
(71) Applicant: NEC CASIO Mobile Communications, Ltd., Kawasaki-shi Kanagawa 211-8666 (JP)
(72) Inventor: AOIKE, Toru, Kodama-gun Saitama 367-0297 (JP)
(74) Representative: Vossius & Partner
(86) International application number: PCT/JP2011/006444
(87) International publication number: WO 2012/070215

(57) **Abstract**

Provided are a mobile terminal that displays information regarding environment in a more convenient way, a non-transitory computer readable medium storing a control program thereof, and a method of controlling the same. A mobile terminal (1) according to the present invention includes environmental information acquisition means (11) that acquires predetermined environmental information regarding a current location of the mobile terminal (1) or a surrounding area of the current location, environmental information acquisition control means (12) that causes the environmental information acquisition means (11) to acquire the environmental information while a predetermined application that performs processing other than acquisition of the environmental information is executed by a user's operation, and display means (13) that displays the acquired environmental information.

## Description

### Technical Field

The present invention relates to a mobile terminal, a non-transitory computer readable medium storing a control program thereof, and a method of controlling the same, and more specifically, to a mobile terminal including a function of broadcasting information regarding environment such as intensity of ultraviolet rays to a user, a non-transitory computer readable medium storing a control program thereof, and a method of controlling the same.

### Background Art

In recent years, it has been known that, when a human body is exposed to excessive amount of ultraviolet rays, it has great effects on the health. As the health effects of ultraviolet rays have been widely known, more and more users carry ultraviolet sensors, measure ultraviolet rays outside the home, and take appropriate countermeasures against ultraviolet rays based on the measurement result.

Patent literature 1 discloses an information terminal equipment to constantly obtain information of ultraviolet rays, and to efficiently use the information of ultraviolet rays. The information terminal equipment disclosed in Patent literature 1 includes detection means for detecting ultraviolet rays or the like, and conversion means for converting the result obtained by the detection means into a state that can be used by a user. The detection means is an ultraviolet sensor, or a body of a mobile telephone equipment formed of resin material which reacts to ultraviolet rays. The conversion means performs conversion so as to be able to display the amount of ultraviolet rays using a predetermined content, corresponding sound, corresponding light, the amount of backlight or the like according to an amount or intensity of ultraviolet rays or the like detected by the detection means.

### Citation List

### Patent Literature

**Patent literature 1:** Japanese Unexamined Patent Application Publication No. 2004-23520

### Summary of Invention

### Technical Problem

According to the technique disclosed in Patent literature 1, the user is able to know the amount and intensity of ultraviolet rays using an information terminal. However, the user is often absorbed in other functions of the information terminal including a phone call, checking of e-mails, and creation of e-mails. This causes the problem that the user tends to forget measuring ultraviolet rays.

The present invention aims to provide a mobile terminal including a function of broadcasting information regarding environment such as intensity of ultraviolet rays to a user, a non-transitory computer readable medium storing a control program thereof, and a method of controlling the same.

### Solution to Problem

A mobile terminal according to the present invention includes: environmental information acquisition means for acquiring predetermined environmental information regarding a current location of the mobile terminal or a surrounding area of the current location; environmental information acquisition control means for causing the environmental information acquisition means to acquire the environmental information while a predetermined application that performs processing other than acquisition of the environmental information is executed by a user's operation; and display means for displaying the acquired environmental information.

A non-transitory computer readable medium storing a control program of a mobile terminal according to the present invention incorporates a computer in the mobile terminal including environmental information acquisition means for acquiring predetermined environmental information regarding a current location of the mobile terminal or a surrounding area of the current location and display means for displaying the acquired environmental information, in which the non-transitory computer readable medium causes the computer to function as environmental information acquisition control means which causes the environmental information acquisition means to acquire the environmental information while a predetermined application that performs processing other than acquisition of the environmental information is executed by a user's operation.

A method of controlling a mobile terminal according to the present invention includes: causing environmental information which is information regarding environment to be acquired while a predetermined application that performs processing other than acquisition of predetermined environmental information regarding a current location of the mobile terminal or a surrounding area of the current location is executed by a user's operation; and displaying the acquired environmental information on display means.

### Advantageous Effects of Invention

According to the present invention, it is possible to provide a mobile terminal that is capable of displaying information regarding environment such as intensity of ultraviolet rays in a more convenient way, a non-transitory computer readable medium storing a control program thereof, and a method of controlling the same.

### Brief Description of Drawings

Fig. 1 is a diagram showing a mobile terminal 1 according to a first exemplary embodiment;
Fig. 2 is a diagram showing the detail of a configuration of a mobile terminal 2 according to the first exemplary embodiment;
Fig. 3A is a diagram showing a screen on a display 33 according to the first exemplary embodiment;
Fig. 3B is a diagram showing a screen on the display 33 according to the first exemplary embodiment;
Fig. 3C is a diagram showing a screen on the display 33 according to the first exemplary embodiment;
Fig. 4A is a diagram showing a screen on the display 33 according to the first exemplary embodiment;
Fig. 4B is a diagram showing a screen on the display 33 according to the first exemplary embodiment;
Fig. 4C is a diagram showing a screen on the display 33 according to the first exemplary embodiment;
Fig. 5A is a diagram showing a screen on the display 33 according to the first exemplary embodiment;
Fig. 5B is a diagram showing a screen on the display 33 according to the first exemplary embodiment;
Fig. 5C is a diagram showing a screen on the display 33 according to the first exemplary embodiment;
Fig. 6A is a diagram showing a screen on the display 33 according to the first exemplary embodiment;
Fig. 6B is a diagram showing a screen on the display 33 according to the first exemplary embodiment;
Fig. 7 is a flowchart showing processing of waiting for start of an application, measuring an ultraviolet level, and displaying information of countermeasures against ultraviolet rays as necessary according to the first exemplary embodiment;
Fig. 8 is a diagram showing a mobile terminal 3 according to a second exemplary embodiment; and
Fig. 9 is a flowchart showing an operation of the mobile terminal 3 according to the second exemplary embodiment.

### Description of Embodiments

### First exemplary embodiment

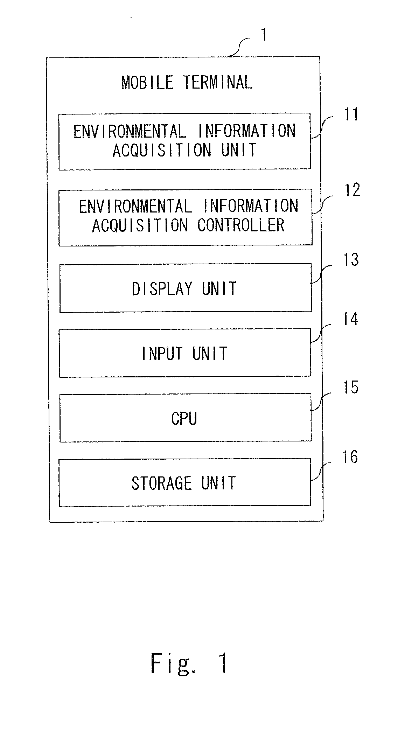

Hereinafter, exemplary embodiments of the present invention will be described with reference to the drawings. Fig. 1 is a diagram showing a mobile terminal 1 according to this exemplary embodiment. The mobile terminal 1 according to this exemplary embodiment includes an environmental information acquisition unit 11 that acquires information regarding environment (environmental information) such as intensity of ultraviolet rays, for example, an environmental information acquisition controller 12 that controls the environmental information acquisition unit 11, and a display unit 13 that displays the environmental information acquired by the environmental information acquisition unit 11. The mobile terminal 1 further includes an input unit 14 that allows a user to operate the mobile terminal 1, a CPU 15 that performs processing of a predetermined application which is specified to be started by input from the user, and a storage unit 16 that stores a program of the predetermined application.

The mobile terminal 1 executes a plurality of processings in parallel, and executes an application functions such as voice calls, e-mail functions, access to websites, games, music reproduction, for example, according to an operation by the user through the input unit 14.

The environmental information acquisition controller 12 activates the environmental information acquisition unit 11 to cause the environmental information acquisition unit 11 to acquire the environmental information. The environmental information acquisition unit 11 is an ultraviolet sensor, for example. In this case, even when the user does not directly start the environmental information acquisition unit 11, the environmental information acquisition controller 12 activates the environmental information acquisition unit 11 upon detecting that a predetermined application has been started. For example, assume that a voice call function, an e-mail function, and access to a website are set as predetermined applications. In this case, when the user starts any one of the functions of a voice call, an e-mail function, and access to a website instead of activating the environmental information acquisition unit 11, the environmental information acquisition unit 11 is automatically activated by the environmental information acquisition controller 12.

The environmental information acquisition unit 11 measures intensity of ultraviolet rays, for example, to acquire the environmental information. The display unit 13 displays the environmental information acquired by the environmental information acquisition unit 11.

The mobile terminal 1 according to this exemplary embodiment is able to automatically acquire and display the environmental information even when the user does not intentionally performs an operation of acquiring the environmental information. Accordingly, even when the user is absorbed in other functions of the mobile terminal (e.g., phone call, creating or checking e-mails), for example, the environmental information is automatically displayed upon completion of these functions. Accordingly, it is possible to draw a user's attention to the environmental information by the functions of automatic acquisition and automatic display by the mobile terminal 1 even when the user is absorbed in other functions.

Further, the mobile terminal 1 according to this exemplary embodiment automatically displays the environmental information upon completion of other functions such as creating or checking e-mails. Accordingly, there is no need for the user to perform complex and burdensome operations such as acquisition and display of the environmental information while creating e-mails. This further simplifies the user's operation. Further, it is possible to easily perform a design for use in the interface.

Furthermore, recent mobile terminals have become more and more sophisticated, and achieve multiple functions. Therefore, for example, a mobile terminal that acquires environmental information by a user's operation requires a step of calling up and displaying the function of acquiring the environmental information. Further, it is required for the user to wait from when the user starts processing of acquiring environmental information until when the result is displayed. Meanwhile, in the mobile terminal 1 according to this exemplary embodiment, in response to a start of a predetermined application such as creation of an e-mail, for example, acquisition of environmental information such as measurement of an ultraviolet level is automatically performed in the background. Accordingly, it is possible to provide the latest information to the user without requiring the user to wait.

### Second exemplary embodiment

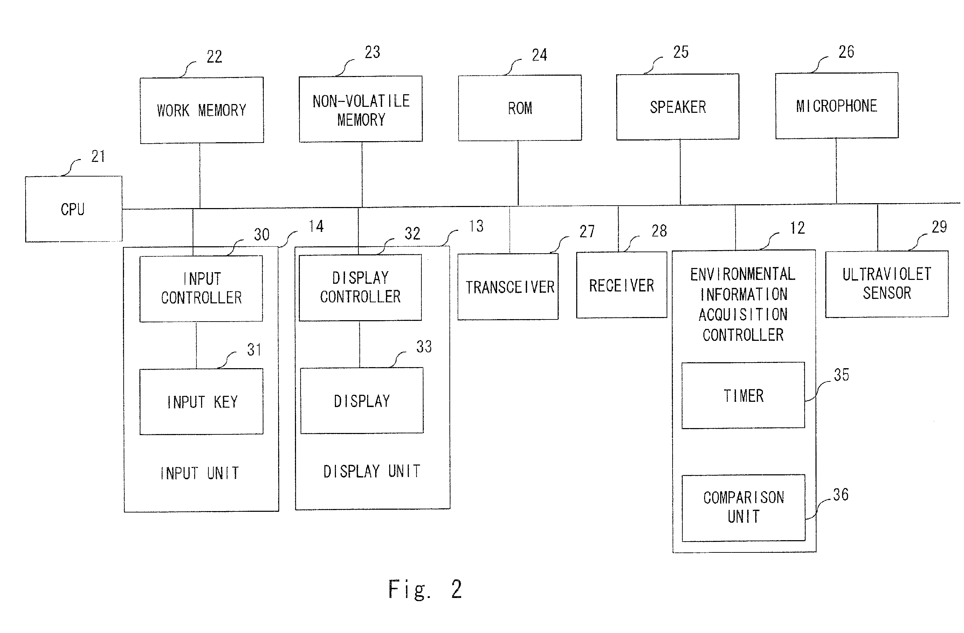

A mobile terminal 2 according to a second exemplary embodiment will be described. Fig. 2 is a diagram showing the detail of a configuration of the mobile terminal 2 according to this exemplary embodiment. The mobile terminal 2 measures intensity of ultraviolet rays as environmental information. Accordingly, the mobile terminal 2 includes an ultraviolet sensor 29 as an environmental information acquisition unit 11. Further, an environmental information acquisition controller 12 includes a timer 35 and a comparison unit 36.

Further, the mobile terminal 2 includes a display unit 13, an input unit 14, a central processing unit (CPU) 21, a work memory 22, a non-volatile memory 23, a read only memory (ROM) 24, a speaker 25, a microphone 26, a transceiver 27, and a receiver 28.

The mobile terminal 2 is a mobile telephone apparatus, for example. However, the mobile terminal 2 may be a PDA (Personal Data Assistance, Personal Digital Assistants: personal mobile information communication equipment) or the like. The mobile terminal 2 wirelessly communicates with an external base station (not shown), thereby performing voice calls with or transmitting or receiving e-mails to or from other mobile terminals. Further, the mobile terminal 2 includes a plurality of functions in addition to voice call, transmission/reception of e-mails. Other functions of the mobile terminal 2 may be, for example, voice calls with other telephones, creation or transmission/reception of e-mails, registration in a phonebook, schedule management, broadcast of various information by an alarm, electronic money, reproduction or download of music or video, connection to the Internet, games, and the like.

The work memory 22 includes a random access memory (RAM). The CPU 21 temporarily stores necessary data in the work memory 22 when executing programs.

The non-volatile memory 23 is a semiconductor memory to which erasing and writing of data can be performed, and which can retain stored information even when power is off. For example, the non-volatile memory 23 stores user data such as phonebook data, various setting information, content of e-mails that are sent or received, and the like.

The ROM 24 stores various control programs that allow the CPU 21 to execute applications. The speaker 25 is an apparatus to output ringtone/voice/confirmation sound and the like to the outside. The microphone 26 is an apparatus that converts voice into electrical signals and sends messages when a user performs a voice call.

The transceiver 27 includes a long-distance communication unit (not shown) that wirelessly transmits or receives information to or from an external base station or the like, and a short-distance communication unit (not shown) to achieve functions such as electronic money. The long-distance communication unit performs communication with an external base station or a wireless LAN by radio communication, for example, to transmit or receive information. In this way, functions such as voice communication, transmission or reception of e-mails or the like is achieved. The short-distance communication unit includes an integrated circuit (IC) chip and the like, and performs communication with an external dedicated apparatus in a short distance, thereby achieving payment by electronic money.

The receiver 28 is an apparatus to output voice of a communication partner in voice call or the like. The ultraviolet sensor 29 is an apparatus to measure the intensity of ultraviolet rays. The ultraviolet sensor 29 is arranged on one of the front surface, the back surface, and the side surface of the mobile terminal 2 so that the ultraviolet sensor 29 is illuminated with light when the user uses the mobile terminal 2.

The display unit 13 includes a display controller 32 and a display 33. The display controller 32 is a control circuit that controls the screen on the display 33. The display 33 is arranged on the front surface of the apparatus body of the mobile terminal 2, for example, and includes a black and white or color liquid crystal panel or an organic electro-luminescence (organic EL).

The input unit 14 includes an input controller 30 and input keys 31. The input keys 31 are a user interface that allows the user to operate the mobile terminal 2. The input controller 30 is a circuit that detects the input from the input keys 31 and transmits the input to the CPU 21 through a bus.

The CPU 21 controls the whole mobile terminal 2. The components of the mobile terminal 2 are interconnected by the bus 34. The CPU 21 acquires various information from the components of the mobile terminal 2 through the bus 34. Then the CPU 21 processes the acquired information and outputs the information to the components, thereby being able to control the components of the mobile terminal 2 and to achieve the applications or the like.

The features of the mobile terminal 2 according to this exemplary embodiment will further be described. The environmental information acquisition controller 12 causes the environmental information to be acquired when a predetermined application which is not directly connected to the processing of acquiring the environmental information (e.g., checking e-mails) is started by an input by the user or while the predetermined application is being performed. In this exemplary embodiment, it is assumed that the intensity of ultraviolet rays measured by the ultraviolet sensor 29 is the environmental information, and a predetermined application is start of a voice call.

The environmental information acquisition controller 12 includes the timer 35. When a predetermined application is activated, the timer 35 measures time after the start of the predetermined application. In this exemplary embodiment, the environmental information acquisition controller 12 causes the ultraviolet sensor 29 to measure the intensity of ultraviolet rays after a lapse of a predetermined period of time from the start of the voice call. When the voice call is ended, the environmental information acquisition controller 12 causes the display unit 13 to display the intensity of ultraviolet rays measured by the ultraviolet sensor 29.

The environmental information acquisition controller 12 according to this exemplary embodiment includes the comparison unit 36. The comparison unit 36 includes a first threshold, and compares the first threshold with the measurement value of the amount of ultraviolet rays. The first threshold is a value to determine whether to display the environmental information to the user. More specifically, the comparison unit 36 compares the value of ultraviolet rays measured by the ultraviolet sensor 29 with the first threshold. When the measurement value is equal to or smaller than the first threshold, the environmental information acquisition controller 12 does not display the measurement value of ultraviolet rays on the display 33 even when the voice call is ended. When the measurement value is equal to or greater than the first threshold, the environmental information acquisition controller 12 displays the measurement value on the display 33 after the voice call is ended. Specifically, the display is performed when the intensity of ultraviolet rays or a UV index (the UV index will be described later) is equal to or greater than four, and the display is not performed when the intensity of ultraviolet rays is equal to or smaller than four.

The comparison unit 36 may further include a second threshold which is greater than the first threshold in addition to the first threshold to determine whether to perform display. The second threshold is a measurement value which is determined that effects of ultraviolet rays on human bodies are so large that the user should immediately take any measure. When the measurement value of ultraviolet rays is equal to or greater than the second threshold, the intensity of ultraviolet rays may be broadcasted to the user regardless of whether the voice call is completed. More specifically, an alarm sound may be emitted during the voice call, for example. Accordingly, when the intensity of ultraviolet rays is high (e.g., UV index 8 or larger) and the effects on human bodies are strong, it is possible to warn the user to immediately take measures.

Furthermore, the value measured by the ultraviolet sensor 29 may be displayed upon completion of the voice call regardless of the intensity of ultraviolet rays. Accordingly, it is possible to prevent such a situation in which the user forgets checking the amount of ultraviolet rays. Furthermore, while the measurement value of ultraviolet rays may be acquired every time the voice call is started, the measurement of ultraviolet rays may not be performed again within a predetermined period of time (e.g., one hour) after the measurement of the value of ultraviolet rays. Accordingly, even when a predetermined application such as voice call is frequently performed, the measurement of ultraviolet rays is not frequently performed, thereby being able to suppress a waste of power consumption.

Now, the UV index will be described. In the Meteorological Agency, in order to clearly indicate the degree of effects of ultraviolet rays on human bodies, the intensity of ultraviolet rays is indicated by an index. This is called a UV index. Due to the factors such as absorption by ozone layers, the intensity of ultraviolet rays greatly varies on the ground for each wavelength. Further, the degree of the effects on human bodies varies for each wavelength of ultraviolet rays. Accordingly, the product of the intensity of ultraviolet rays for each wavelength and the degree of the effects of ultraviolet rays on human bodies for each wavelength is calculated, and the resultant value is further integrated by the wavelength of ultraviolet rays. Accordingly, it is possible to calculate the comprehensive degree of effects on human bodies. The UV index is obtained by dividing the degree of effects by a predetermined value and indicating the resultant value by the number from 1 to about 12.

In this example, the mobile terminal 2 includes the ultraviolet sensor 29 as the environmental information acquisition controller 12, and measures and displays the intensity of ultraviolet rays as the environmental information. The environmental information is a predetermined measurement value regarding a current location of the mobile terminal or a surrounding area thereof. The environmental information is not limited to the intensity of ultraviolet rays but may be any kind of information as long as it is the information regarding environment. For example, other sensors such as a temperature sensor or an odor sensor that can perform quantitative measurement may be used. In this case, for example, the concentration of harmful substances (e.g., NOx, methane gas, photochemical smog, the amount of pollen in the air) may be measured. Further, for example, values measured in a plurality of types of sensors (a discomfort index or the like calculated based on temperature and humidity) may be combined and displayed.

Display methods other than the one using the UV index may be used. For example, the measurement result in a temperature sensor may be compared to the first and second thresholds, and the comparison result may be displayed as the degree of risk of heat stroke or the like based on the magnitude of the comparison result. Further, the warning method is not limited to the one using the screen on the display 33. For example, when the measurement value exceeds the second threshold, an alarm sound may be emitted from the speaker 25 or the like.

While the ultraviolet sensor as ambient environment measurement means is included in the terminal apparatus in the description above, data may be obtained from a peripheral sensor device or data collected from the peripheral sensor device may be acquired by communication through a network. For example, the information regarding environment may be acquired through a network connected via the transceiver 27. The environmental information in this case may be, for example, a value obtained by measuring the current intensity of ultraviolet rays or the like by external equipment. Alternatively, the environmental information may be predicted data such as forecast of daytime ultraviolet rays (strong, weak, etc.), weather forecast such as fine weather/rainy weather, and the like. Further, the history of previous data or the like may be referred. The environmental information is not limited to measurement of harmful substances or the like. Laundry information indicating how soon washed clothes will dry up or the like may be acquired by accessing a website on the Internet.

While real-time data is acquired as the environmental information in the description above, data based on previous data history and data based on prediction may be used instead. For example, history data or prediction data on the network may be acquired and determined. Further, qualitative data may be acquired in addition to quantitative data. As stated above, it is needless to say that the configuration stated above may be applied also to a case in which the environmental information is acquired through the Internet or the like.

Next, a case will be described in which the mobile terminal 2 according to this exemplary embodiment is set to measure the intensity of ultraviolet rays after the elapse of three minutes after the voice call is started, for example. It is assumed here that the intensity of ultraviolet rays is equal to or greater than the first threshold and is equal to or smaller than the second threshold.

First, the transceiver 27 receives the voice call from outside, and transmits information indicating the arrival of the voice call to the bus 34. When the transceiver 27 receives the information indicating the reception of the voice call, the CPU 21 notifies the user of the arrival of the voice call using the speaker 25 or the like.

The user operates the input unit 14 to start the voice call. In the input unit 14, the input controller 30 detects entered keys of keys 31 that are manipulated. Then the input unit 14 converts the detection result into an electrical signal and transmits the electrical signal to the bus 34. The CPU 21 receives a voice call start signal through the bus 34. Then, the CPU 21 transmits a call start signal to start a voice call to the speaker 25, the transceiver 27, and the receiver 28 through the bus 34, to start the voice call. The microphone 26 converts an audio signal of the user into an electrical signal to transmit the electrical signal to the bus 34. The transceiver 27 externally transmits the electrical signal of the user's voice transmitted from the microphone 26. Further, the transceiver 27 transmits an audio signal of a communication partner that is externally received to the bus 34. The receiver 28 converts the audio signal of the communication partner into an audio signal to output the audio signal. In this way, the speaker 25, the transceiver 27, and the receiver 28 receive or transmit signals with one another using the bus 34, thereby achieving the voice call.

The environmental information acquisition controller 12 detects the call start signal transmitted from the CPU 21 to the bus 34 and detects start of the voice call. The timer 35 counts the time elapsed from the detection of the call start signal. When the time counted by the timer 35 becomes three minutes, the environmental information acquisition controller 12 causes the ultraviolet sensor 29 to measure ultraviolet rays through the bus 34. The ultraviolet sensor 29 measures ultraviolet rays. Upon completion of the measurement of ultraviolet rays, the ultraviolet sensor 29 transmits the measurement result to the bus 34. The environmental information acquisition controller 12 compares the intensity of ultraviolet rays received from the bus 34 with the first and second thresholds in the comparison unit 36, and detects that the measurement value is greater than the first threshold. The environmental information acquisition controller 12 transmits the measurement value to the bus 34. The work memory 22 receives the measurement result through the bus 34 and temporarily stores the measurement result.

When the voice call is ended, the user operates the input key 31 to end the phone call. The input controller 30 detects the user's operation, and transmits a call end signal to the bus 34. Upon receiving the call end signal, the display unit 13 displays the end of the voice call on the display 33.

Upon receiving the call end signal through the bus 34, the environmental information acquisition controller 12 acquires the measurement result from the work memory 22, and outputs the measurement result to the display unit 13 through the bus 34.

The display unit 13 receives the measurement value of the intensity of ultraviolet rays transmitted to the bus 34. The display controller 32 converts the measurement result into an index such as UV index, for example, and displays the index on the display 33.

After showing the display screen indicating voice call end, the display 33 shows the measurement value. When the voice call is started, or after the elapse of a predetermined period of time from the start, the mobile terminal 2 according to this exemplary embodiment acquires the measurement value of ultraviolet rays and displays the measurement value. In this way, it is possible to measure ultraviolet rays in response to the start of the voice call and display the result of measuring ultraviolet rays. Further, by acquiring the measurement value of ultraviolet rays after the elapse of a predetermined period of time from the start of the voice call, it is possible to shift the timings to start the voice call and processing of measuring ultraviolet rays, for example. Accordingly, it is possible to shift the peaks of the load imposed on the memory and to smoothly perform start of the voice call.

Described above is the case in which the measurement value is equal to or smaller than the second threshold. When the measurement value is equal to or greater than the second threshold, the measurement result is displayed regardless of the operation of the specific application. Further, while the measurement is start after the elapse of a predetermined period of time (in this example, three minutes) in response to the start of the application regarding the timing to start the processing of acquiring the environmental information, the ultraviolet level may be measured immediately after the application is started.

The predetermined application is preferably a function such as a voice call, creation of an e-mail, reproduction of music, viewing of a movie, and a game in which the terminal is used for a predetermined period of time. The ultraviolet level is measured in the background in response to the start of the predetermined application or while the predetermined application is being executed, whereby it is possible to provide a mobile terminal apparatus that is capable of displaying the ultraviolet information based on the latest measurement result and the information of countermeasures against ultraviolet rays without requiring the user to wait.

Further, the user may use the mobile terminal 2 without checking the display 33 of the mobile telephone when using a function of electronic money or the like. In such a case, it is impossible to broadcast the environmental information to the user even when the environmental information is acquired and displayed. This also leads to an increase in power consumption and the like due to the unnecessary operation of the ultraviolet sensor 29. Since the user may not check the display 33 when using an application which does not require the user to check the display 33 in use, it is preferable that the environmental information is not acquired even when such an application is started. The same holds true for applications in which processing is instantaneously ended. If it takes time to acquire the environmental information, it is preferable that the environmental information is not acquired even when such applications are started since it is impossible to immediately display the environmental information after the completion of such applications.

The mobile terminal 2 according to this exemplary embodiment acquires and broadcasts the ambient environment in response to start of an application. According to this technique, the environmental information is only acquired when the application is started, thereby being able to reduce the load compared to the case in which the environmental information is acquired at regular time intervals, for example.

Furthermore, according to this exemplary embodiment, the environmental information is acquired only in predetermined applications including applications which make the user difficult to execute other operations during the execution of the applications (e.g., phone call in a mobile telephone), applications which makes the user get absorbed and forget about himself/herself (e.g., checking/creating e-mails or websites on the Internet), applications which require relatively long time from start to end (e.g., games). The applications are limited to predetermined applications, thereby being able to prevent an increase in power consumption and reduction in processing capability in the background processing in all the processing. Preferably, the user is able to select at which application the environmental information should be acquired. This achieves the form which conforms to the state of usage by the user.

Another effect is that, since the applications are limited, it is possible to easily perform a design for efficient I/O use. Furthermore, by setting the processing of acquiring the environmental information to the applications that are daily used by the user, it is possible to prevent such a situation in which the user forgets acquiring the environmental information. Furthermore, a value obtained by measuring substances that are harmful to human bodies (e.g., ultraviolet rays) is displayed, whereby such effects are expected that the environmental consciousness by the user is improved and the user takes effective countermeasures against harmful substances.

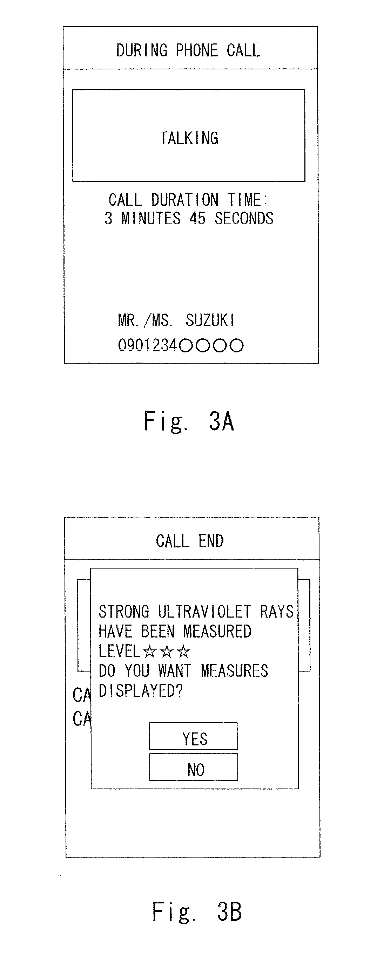

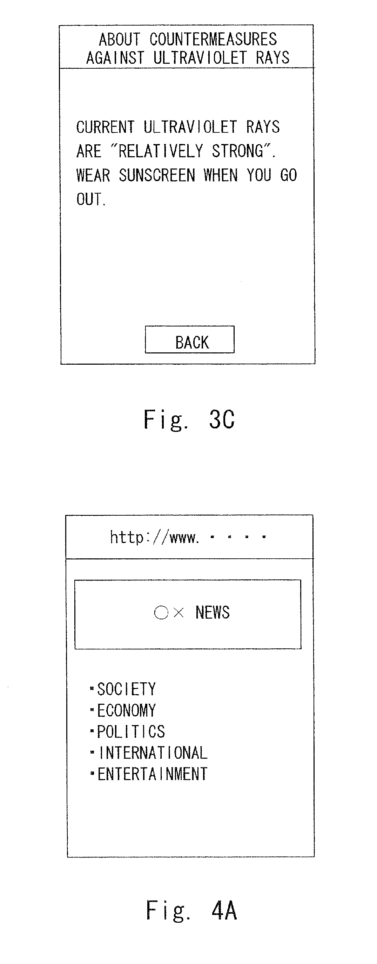

Next, screens on the display 33 will be described. Figs. 3A to 5C are diagrams showing screens on the display 33. Fig.3 is a diagram showing a screen on the display 33 when ultraviolet rays are measured in response to voice communication and the results are displayed. Fig. 3A displays that a phone call is being performed, and also displays call duration time, and the name ("Mr./Ms. Suzuki") and the telephone number of a communication partner on the phone call. In this case, the mobile terminal 2 starts measuring the elapsed time in response to the start of the voice call, and acquires environmental information after an elapse of a predetermined period of time (e.g., three minutes). In summary, the environmental information is acquired during the voice call. When the voice call is ended, the display 33 shown in Fig. 3B is shown.

Fig. 3B displays the detail of the measurement value after the display 33 indicating call end is displayed for a predetermined period of time after the phone call is ended. While Fig. 3B shows a call end screen, this indicates the processing of S204 is suspended until when the phone call is ended since it is more likely that the user does not look at the screen during the phone call. In this case, the number of asterisks is increased or decreased according to the intensity of ultraviolet rays. In this example, three asterisks are shown, which means ultraviolet rays are "relatively strong". Further, the user determines whether to display countermeasures regarding the environmental information by selecting "Yes" or "No" button.

Fig. 3C displays the countermeasures against ultraviolet rays according to the intensity of ultraviolet rays that is measured. Fig. 3C is a display example when the ultraviolet level which is relatively strong (e.g., UV index 4 or larger) is measured. When the "Back" button is selected, the screen goes back to the display 33 shown in Fig. 3B, and other processing may be started.

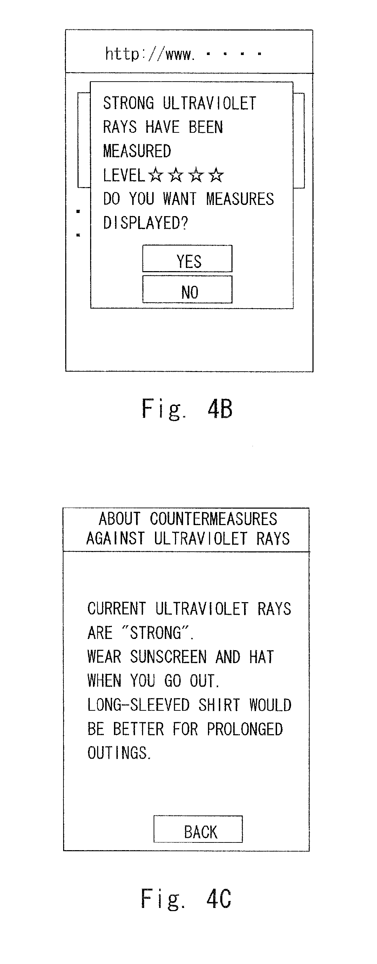

Fig. 4 is a diagram showing display when the environmental information is acquired in response to access to the Internet by the mobile terminal 2. Fig. 4A is a diagram showing a screen on the display 33 while the user views the website on the Internet. The upper part on the screen shows the uniform resource locator (URL) of the webpage. The middle part of the display 33 shows "○× news", and the lower part shows the genre of the news such as society, economy and the like. When the user ends viewing the website on the Internet, the screen shown in Fig. 4B is displayed.

Fig. 4B is a screen displayed after the display of the Internet is completed. Fig. 4B shows the measurement value of ultraviolet rays by the number of asterisks, as is similar to Fig. 3B. In this case, in Fig. 4B, four asterisks are shown, which means that ultraviolet rays are "strong", and the user selects whether to display countermeasures.

Fig. 4C displays the countermeasures according to the measured intensity of ultraviolet rays, as is similar to Fig. 3C. (Display example when strong ultraviolet level (e.g., UV index 6 or larger) is measured.) Since the measurement value of ultraviolet rays in Fig. 4C is higher than that in Fig. 3C, the content of display is changed. Other points are similar to Fig. 3C.

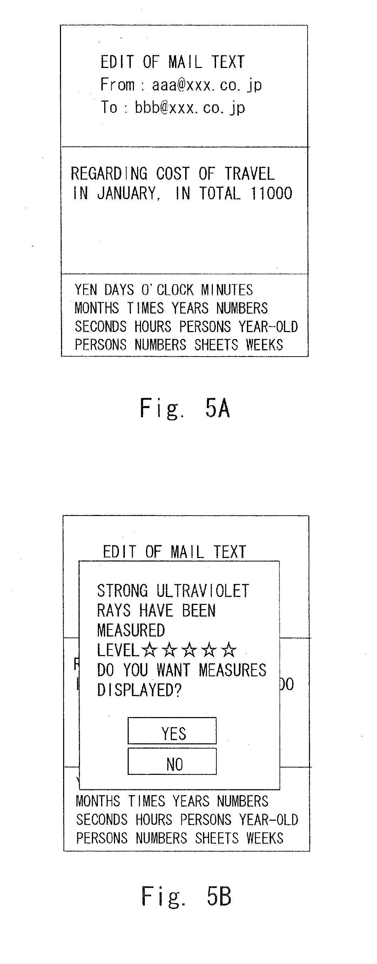

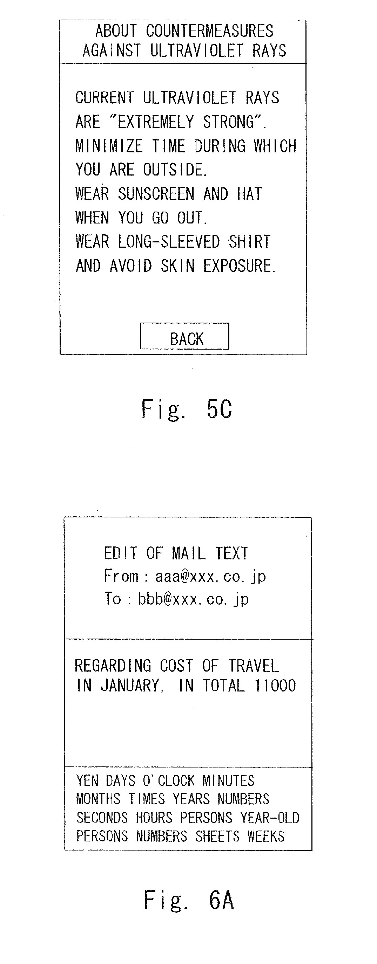

Fig. 5 is a diagram showing display in a case in which the mobile terminal 2 acquires environmental information in response to transmission of an e-mail. The method of displaying the intensity of ultraviolet rays is similar to that in Figs. 3C and 4C, and thus description will be omitted. Fig. 5C is a diagram showing "display example when extremely strong ultraviolet level (e.g., UV index 8 or larger) is measured".

As stated above, the mobile terminal 2 according to this exemplary embodiment displays the result of measuring ultraviolet rays after the use of specific functions such as a voice call, viewing of a website on the Internet, and creation of an e-mail. The mobile terminal 2 then displays measurements against ultraviolet rays based on the user's selection. This prevents a situation in which the user forgets checking the measurement value of ultraviolet rays even when the user is absorbed in a specific application. Further, after using the function such as a voice call, viewing of a website on the Internet, and creation of an e-mail, the user is more likely to check the display 33 to confirm the end of the function. Accordingly, it is possible to efficiently broadcast the information to the user in a more natural manner.

The first threshold which is a criterion to determine whether to display the environmental information may be arbitrarily set by the user. For example, the measurement result may be displayed even when the UV index is less than 4. While described above is the case in which the screen which asks the user whether to display the information of countermeasures against ultraviolet rays is displayed, the measurement result and the information of countermeasures against ultraviolet rays may be immediately displayed instead of displaying the screen which asks the user whether to display the information of countermeasures against ultraviolet rays. Accordingly, it is possible to display the countermeasures against the environmental information without requiring the user's operation.

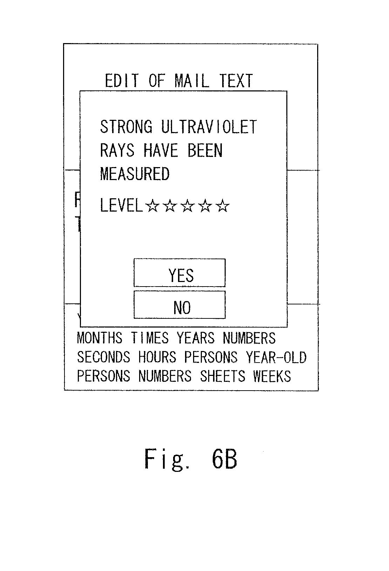

Further, while it is displayed whether to display the measures based on the user's selection after displaying the measurement value of ultraviolet rays in this exemplary embodiment, only the measurement value of ultraviolet rays may be displayed. Fig. 6B is a diagram showing a screen on the display 33 when only the measurement value of ultraviolet rays is displayed. Fig. 6A shows a screen on the display 33 while an e-mail is created, as is similar to Fig. 5A. Fig. 6B displays the measurement value of ultraviolet rays after creation of the e-mail is completed, as is similar to Fig. 5B. However, only the measurement value of ultraviolet rays is displayed in Fig. 6B. Therefore, "Yes" and "No" to select whether to display the countermeasures against ultraviolet rays are not displayed on the screen shown in Fig. 6B. For example, a busy user may feel reluctant to check the countermeasures against ultraviolet rays every time. In this case, by displaying only the measurement value of ultraviolet rays, it is possible to carry out display with higher efficiency.

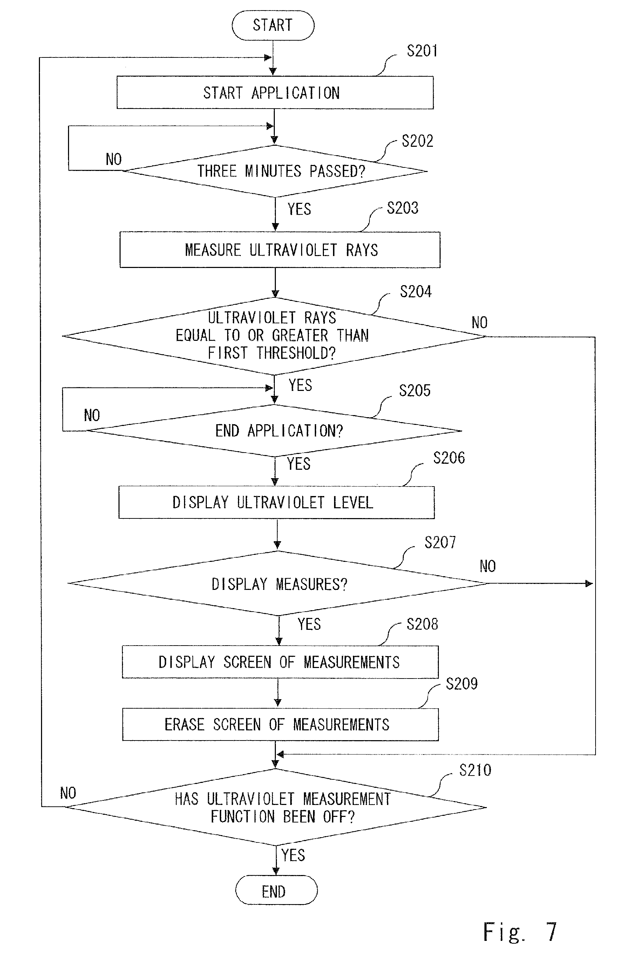

Next, a flow of an operation of the mobile terminal 2 according to this exemplary embodiment will be described. Fig. 7 is a flowchart showing processing of waiting for start of an application, measuring the ultraviolet level, and displaying information of countermeasures against ultraviolet rays as necessary. In this example, the mobile terminal 2 shown in Fig. 2 measures the intensity of ultraviolet rays by the ultraviolet sensor 29 after the elapse of a predetermined period of time from start of a specific application (voice call). Further, the environmental information acquisition controller 12 includes a first threshold, and is adapted to display information of the intensity of ultraviolet rays on the display 33 when the intensity of ultraviolet rays is equal to or greater than the first threshold.

First, a predetermined application such as a voice call is started (Step S201). Next, time elapsed from the start of the voice call is measured to determine whether a predetermined period of time (in this example, three minutes) has been elapsed (Step S202). When the predetermined period of time has not been elapsed, the mobile terminal waits for the elapse of the predetermined period of time (Step S202: No). After the elapse of the predetermined period of time (Step S202: Yes), the ultraviolet level is measured in the background (Step S203). This state corresponds to the states shown in Figs. 3A, 4A, 5A, and 6A.

Next, it is determined whether the intensity of ultraviolet rays that is measured is equal to or greater than the first threshold (Step S204). When the intensity is equal to or smaller than the first threshold (Step S204: No), the measurement value of ultraviolet rays is not displayed. When the measurement value is equal to or greater than the first threshold (Step S204: Yes), it is determined whether the specific application is ended (Step S205). When a predetermined application (voice call) is not ended (Step S205: No), the mobile terminal waits for the end. When the predetermined application is ended (Step S205: Yes), the result of measuring the intensity of ultraviolet rays is displayed (Step S206). At the same time when the result of measuring the intensity of ultraviolet rays is displayed in Step S206, the screen that asks the user whether to display information of countermeasures against ultraviolet rays is displayed (Step S207). This state corresponds to the states shown in Figs. 3B, 4B, and 5B.

When the user selects to display the information against ultraviolet rays (Step S207: YES), countermeasures against ultraviolet rays are displayed (Step S208). This state corresponds to Figs. 3C, 4C, and 5C. When the user selects not to display the information of countermeasures against ultraviolet rays (Step S207: NO), the screen of the information against ultraviolet rays is not displayed.

Next, when the user performs an operation of erasing information of countermeasures against ultraviolet rays (e.g., when the user presses the "Back" button shown in Figs. 3C, 4C, and 5C) or after the elapse of a predetermined period of time (e.g., one minute), the information of countermeasures against ultraviolet rays is erased (Step S209).

Described above is the case in which the mobile terminal waits for the elapse of a predetermined period of time (S208 in Fig. 2) in order to measure the ultraviolet level at regular time intervals. However, the mobile terminal may be immediately switched to a state of waiting for the start of an application without waiting for the elapse of the predetermined period of time.

When the ultraviolet rays measurement function is set OFF (Step S210: YES), the processing is completed. The ultraviolet rays measurement function is a function of measuring ultraviolet rays in response to the start of a voice call, an e-mail or the like. When the ultraviolet rays measurement function is ON (Step S210: NO), the mobile terminal goes back to the state of waiting for the start of an application.

In this exemplary embodiment, the ultraviolet level is measured in the background in response to the start of an application. Accordingly, it is possible to display the ultraviolet information based on the latest measurement result and the information of countermeasures against ultraviolet rays without requiring the user to wait. Further, in this exemplary embodiment, once the ultraviolet level is measured, the measurement of ultraviolet rays may not be performed again until the elapse of a predetermined period of time even when a predetermined application is started. Accordingly, even when the predetermined applications are frequently started, it is possible to suppress the number of times the measurement of ultraviolet rays is performed and to suppress a waste of power consumption.

### Third exemplary embodiment

The mobile terminal 2 according to the second exemplary embodiment displays the value measured by the ultraviolet sensor 29 when it is equal to or greater than the first threshold or the second threshold. However, even when the value acquired as the environmental information is lower than the first threshold, if a user is in the same condition for a long period of time, it may have a bad effect on the human body. For example, in the case of ultraviolet rays, when the user is exposed to weak ultraviolet rays for a long period of time, it has the same effect as the case in which the user is exposed to strong ultraviolet rays for a short period of time. It is not limited to ultraviolet rays. When the information acquired as the environmental information is concentration of harmful substances in the atmosphere, for example, even when the measurement value is small, if a user is in the same environment for a long period of time, it may have a bad effect on the human body.

In such a case, the problem is not only the value of the environmental information that is temporarily acquired but also the environmental information and time during which the user is in the location in which the environmental information is acquired.

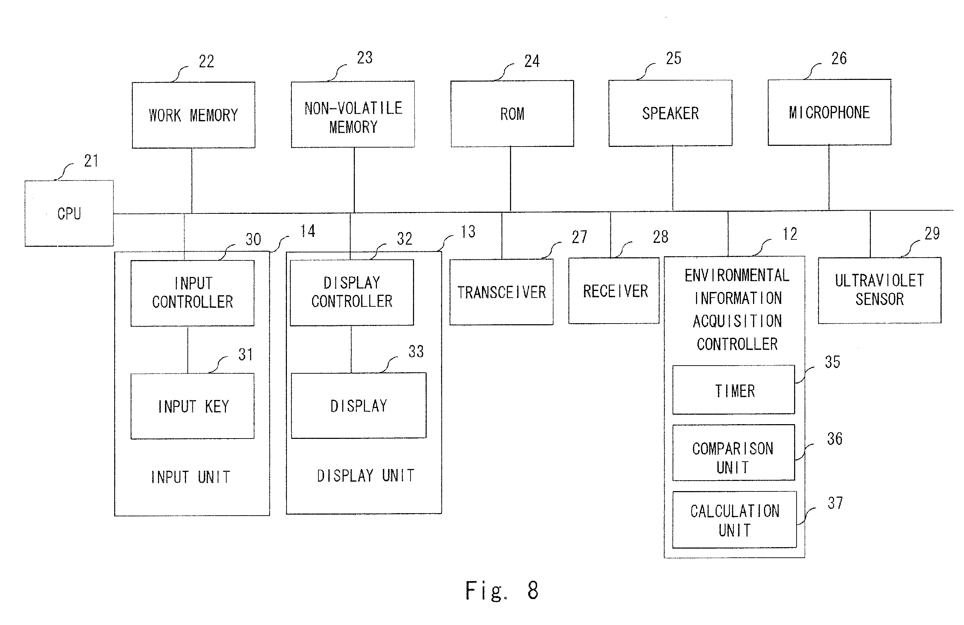

Accordingly, in a third exemplary embodiment, the measures are displayed when the user is in the same environment for a long period of time even when the measurement value is small. Fig. 8 is a diagram showing a mobile terminal 3 according to the third exemplary embodiment.

The mobile terminal 3 is different from the mobile terminal 2 according to the second exemplary embodiment in that the environmental information acquisition controller 12 includes a calculation unit 37. The calculation unit 37 calculates the product of the environmental information acquired by the environmental information acquisition unit 11 and time measured by the timer 35 at regular time intervals. The environmental information acquisition controller 12 compares the amount of environmental information which is the product of the environmental information and time with a third threshold. When the product of the environmental information and time is greater than the third threshold, the measurement result of the environmental information is displayed on the display 33 after the predetermined application is ended.

When the measurement value of ultraviolet rays or harmful substances is small, in the mobile terminal 2 according to the first exemplary embodiment, the display 33 does not show the environmental information and the user may fail to take measures. However, the mobile terminal 3 calculates the product of the environmental information and time, thereby being able to obtain the effects on the human bodies more accurately. Further, by comparing the amount of environmental information which is the value based on the environmental information and time with the third threshold, the case in which the effects on the human bodies is strong can be determined. Further, a conventional ultraviolet rays measurement apparatus and the like can only measure ultraviolet rays. Meanwhile, the mobile terminal 3 according to this exemplary embodiment regards that the period during which a predetermined application is performed is the period during which the user is in the same environmental condition. Then, the mobile terminal 3 is able to combine the measurement result with time, to display the effects on the human bodies.

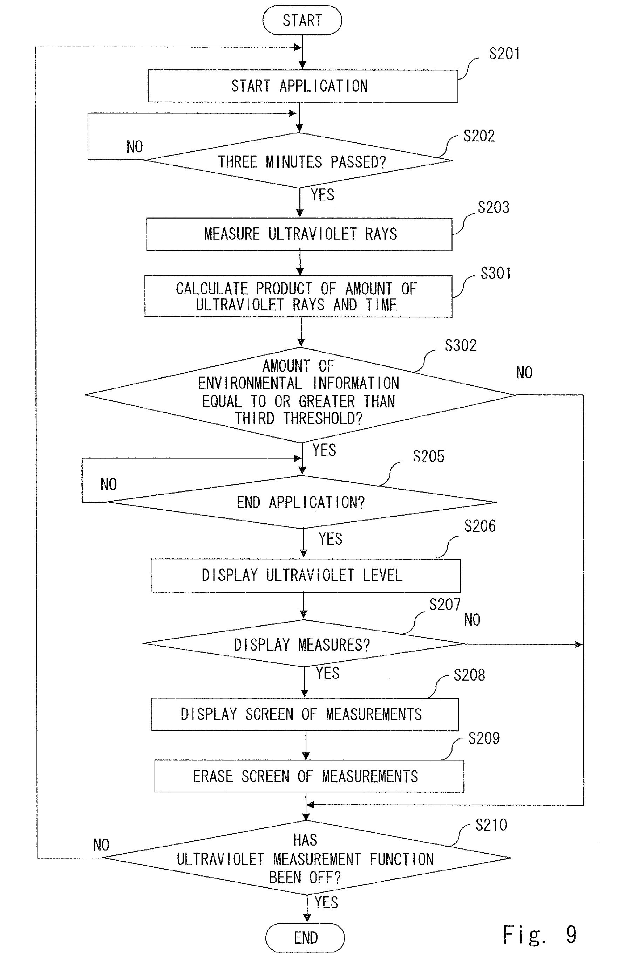

Next, an operation of processing of the mobile terminal 3 will be described. Fig. 9 is a flowchart showing an operation of the mobile terminal 3 according to this exemplary embodiment. The flowchart shown in Fig. 9 according to this exemplary embodiment is different from the flowchart shown in Fig. 7 in that processing of obtaining the amount of environmental information which is the product of the amount of ultraviolet rays and time and processing of comparing the amount of environmental information that is obtained with the third threshold are carried out.

In Step S203, ultraviolet rays are measured. Next, the amount of environmental information, which is the product of the amount of ultraviolet rays that is measured and start time of the predetermined application measured by the timer 35, is calculated (Step S301). Next, the amount of environmental information that is calculated is compared with the third threshold (Step S302). When the amount of environmental information is greater than the third threshold (Step S302: Yes), the ultraviolet level is displayed (Step S204) after the application is completed (Step S205: Yes). When the amount of environmental information is smaller than the third threshold (Step S302: No), the ultraviolet level is not displayed.

In this exemplary embodiment, it is more preferable to broadcast to the user that the effects of ultraviolet rays on human bodies are strong since the user is exposed to ultraviolet rays for a long period of time. For example, a warning such as "You have been exposed to ultraviolet rays for a long time. Be careful" is further added to the display shown in Fig. 3B. Accordingly, it is possible to further draw a user's attention. While the measurement value of the intensity of ultraviolet rays is used as one example of the environmental information, the environmental information is not limited to the intensity of ultraviolet rays as is similar to the first exemplary embodiment. The environmental information may be any kind of information as long as it is the information regarding environment. For example, other sensors such as a temperature sensor or an odor sensor that can perform quantitative measurement may be used. In this case, for example, the concentration of harmful substances (e.g., NOx, methane gas, photochemical smog, the amount of pollen in the air) may be measured. Further, for example, values measured in a plurality of types of sensors (a discomfort index or the like calculated based on temperature and humidity) may be combined and displayed.

Display methods other than the one using the UV index may be used, as is similar to the first exemplary embodiment. For example, the measurement result in a temperature sensor may be displayed as the degree of risk of heat stroke or the like. In this case, by combining the measurement result with the time during which the user is in a hot environment, it is possible to measure the degree of risk of heat stroke with more accuracy. Furthermore, it is needless to say that the configuration described in the third exemplary embodiment may be applied even when the environmental information is acquired by the Internet or the like.

While the present invention has been described as a hardware configuration in the above exemplary embodiments, the present invention is not limited to this. The present invention may achieve the processing of the procedures shown in the flowcharts in Figs. 7 and 9 by causing a central processing unit (CPU) to execute a computer program.
Further, the program stated above can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magnetooptical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Note that the present invention is not limited to the above exemplary embodiments but may be changed as appropriate without departing from the spirit of the present invention.

### (Supplementary note 1)

A mobile terminal comprising:
environmental information acquisition means for acquiring predetermined environmental information regarding a current location of the mobile terminal or a surrounding area of the current location;
environmental information acquisition control means for causing the environmental information acquisition means to acquire the environmental information while a predetermined application that performs processing other than acquisition of the environmental information is executed by a user's operation; and
display means for displaying the acquired environmental information.

### (Supplementary note 2)

The mobile terminal according to Supplementary note 1, wherein the environmental information acquisition control means causes the display means to display the environmental information after the predetermined application ends an operation.

### (Supplementary note 3)

The mobile terminal according to Supplementary note 1 or 2, wherein:
the environmental information acquisition control means comprises a timer that measures time elapsed from start of the predetermined application, and
upon detection of elapse of a predetermined period of time by the timer, the environmental information acquisition control means causes the environmental information acquisition means to acquire the environmental information.

### (Supplementary note 4)

The mobile terminal according to Supplementary notes 1 to 3, wherein:
the environmental information acquisition control means comprises comparison means for comparing the acquired environmental information with a predetermined first threshold, and
when the environmental information is higher than the first threshold, the environmental information acquisition control means causes the display means to display the environmental information.

### (Supplementary note 5)

The mobile terminal according to Supplementary note 4, wherein:
the comparison means further compares the acquired environmental information with a predetermined second threshold, and
when the environmental information is higher than the second threshold, the environmental information acquisition control means causes the display means to perform interrupt-display of the environmental information regardless of the operation of the predetermined application.

### (Supplementary note 6)

The mobile terminal according to Supplementary note 4 or 5, wherein:
the environmental information acquisition control means comprises calculation means for calculating an amount of environmental information which is a product of the acquired environmental information and time measured by the timer,
the comparison means compares a predetermined third threshold with the amount of environmental information, and
when the amount of environmental information is higher than the third threshold, the environmental information acquisition control means causes the display means to perform interrupt-display of the environmental information regardless of an operation of the predetermined application.

### (Supplementary note 7)

The mobile terminal according to any one of Supplementary notes 1 to 6, wherein the environmental information acquisition means comprises a measurement sensor that measures the environmental information.

### (Supplementary note 8)

The mobile terminal according to any one of Supplementary notes 1 to 7, wherein:
the mobile terminal further comprises communication means for acquiring the environmental information from external means through a network, and
the environmental information acquisition means externally acquires the environmental information through the communication means.

### (Supplementary note 9)

The mobile terminal according to any one of Supplementary notes 1 to 8, wherein the environmental information is at least one of intensity of ultraviolet rays, temperature, humidity, concentration of harmful substances in air, an amount of pollen in the air, a discomfort index, sensible temperature, and an odor.

### (Supplementary note 10)

A non-transitory computer readable medium storing a control program of a mobile terminal, the non-transitory computer readable medium incorporating a computer in the mobile terminal comprising environmental information acquisition means for acquiring predetermined environmental information regarding a current location of the mobile terminal or a surrounding area of the current location and display means for displaying the acquired environmental information,
wherein the non-transitory computer readable medium causes the computer to function as environmental information acquisition control means which causes the environmental information acquisition means to acquire the environmental information while a predetermined application that performs processing other than acquisition of the environmental information is executed by a user's operation.

### (Supplementary note 11)

The non-transitory computer readable medium storing the control program of the mobile terminal according to Supplementary note 10, wherein the non-transitory computer readable medium causes processing of displaying the environmental information to be executed when the predetermined application ends the operation.

### (Supplementary note 12)

A method of controlling a mobile terminal comprising:
causing environmental information which is information regarding environment to be acquired while a predetermined application that performs processing other than acquisition of predetermined environmental information regarding a current location of the mobile terminal or a surrounding area of the current location is executed by a user's operation; and
displaying the acquired environmental information on display means.

### (Supplementary note 13)

The method of controlling the mobile terminal according to Supplementary note 12, comprising displaying the environmental information after the predetermined application ends an operation.

While the present invention has been described above with reference to exemplary embodiments, the present invention is not limited to the above exemplary embodiments. The configuration and details of the present invention can be modified in various manners which can be understood by those skilled in the art within the scope of the invention.

This application is based upon and claims the benefit of priority from Japanese Patent Application No. 2010-263344, filed on November 26, 2010, the disclosure of which is incorporated herein in its entirety by reference.

### Reference Signs List

- 1: MOBILE TERMINAL
- 2: MOBILE TERMINAL
- 3: MOBILE TERMINAL
- 11: ENVIRONMENTAL INFORMATION ACQUISITION UNIT
- 12: ENVIRONMENTAL INFORMATION ACQUISITION CONTROLLER
- 13: DISPLAY UNIT
- 14: INPUT UNIT
- 15: CPU
- 16: STORAGE UNIT
- 21: CPU
- 22: WORK MEMORY
- 23: NON-VOLATILE MEMORY
- 24: ROM
- 25: SPEAKER
- 26: MICROPHONE
- 27: TRANSCEIVER
- 28: RECEIVER
- 29: ULTRAVIOLET SENSOR
- 30: INPUT CONTROLLER
- 31: INPUT KEY
- 32: DISPLAY CONTROLLER
- 33: DISPLAY
- 34: BUS
- 35: TIMER
- 36: COMPARISON UNIT
- 37: CALCULATION UNIT

## Claims

1. A mobile terminal comprising:
environmental information acquisition means for acquiring predetermined environmental information regarding a current location of the mobile terminal or a surrounding area of the current location;
environmental information acquisition control means for causing the environmental information acquisition means to acquire the environmental information while a predetermined application that performs processing other than acquisition of the environmental information is executed by a user's operation; and
display means for displaying the acquired environmental information.

2. The mobile terminal according to Claim 1, wherein the environmental information acquisition control means causes the display means to display the environmental information after the predetermined application ends an operation.

3. The mobile terminal according to Claim 1 or 2, wherein:
the environmental information acquisition control means comprises a timer that measures time elapsed from start of the predetermined application, and
upon detection of elapse of a predetermined period of time by the timer, the environmental information acquisition control means causes the environmental information acquisition means to acquire the environmental information.

4. The mobile terminal according to any one of Claims 1 to 3, wherein:
the environmental information acquisition control means comprises comparison means for comparing the acquired environmental information with a predetermined first threshold, and
when the acquired environmental information is higher than the first threshold, the environmental information acquisition control means causes the display means to display the environmental information.

5. The mobile terminal according to Claim 4, wherein:
the comparison means further compares the acquired environmental information with a predetermined second threshold, and
when the environmental information is higher than the second threshold, the environmental information acquisition control means causes the display means to perform interrupt-display of the environmental information regardless of the operation of the predetermined application.

6. The mobile terminal according to Claim 4 or 5, wherein:
the environmental information acquisition control means comprises calculation means for calculating an amount of environmental information which is a product of the acquired environmental information and time measured by the timer,
the comparison means compares a predetermined third threshold with the amount of environmental information, and
when the amount of environmental information is higher than the third threshold, the environmental information acquisition control means causes the display means to perform interrupt-display of the amount of environmental information regardless of an operation of the predetermined application.

7. The mobile terminal according to any one of Claims 1 to 6, wherein the environmental information acquisition means comprises a measurement sensor that measures the environmental information.

8. The mobile terminal according to any one of Claims 1 to 7, wherein:
the mobile terminal further comprises communication means for externally acquiring the environmental information through a network, and
the environmental information acquisition means externally acquires the environmental information through the communication means.

9. A non-transitory computer readable medium storing a control program of a mobile terminal, the non-transitory computer readable medium incorporating a computer in the mobile terminal comprising environmental information acquisition means for acquiring predetermined environmental information regarding a current location of the mobile terminal or a surrounding area of the current location and display means for displaying the acquired environmental information,
wherein the non-transitory computer readable medium causes the computer to function as environmental information acquisition control means which causes the environmental information acquisition means to acquire the environmental information while a predetermined application that performs processing other than acquisition of the environmental information is executed by a user's operation.

10. A method of controlling a mobile terminal comprising:
causing environmental information which is information regarding environment to be acquired while a predetermined application that performs processing other than acquisition of predetermined environmental information regarding a current location of the mobile terminal or a surrounding area of the current location is executed by a user's operation; and
displaying the acquired environmental information on display means.
